# EUROPEAN PATENT APPLICATION

(11) **EP 4 691 262 A1**
(43) Date of publication of application: **11.02.2026**
(21) Application number: 24778951.4
(22) Date of filing: 27.02.2024
(51) Int. Cl.: A23L 7/109

(54) **LOW CARBOHYDRATE NOODLES**

(30) Priority: 31.03.2023 JP 2023058562; 30.01.2024 JP 2024012160
(71) Applicant: NISSIN FOODS HOLDINGS CO., LTD., Yodogawa-ku Osaka-shi, Osaka 532-8524 (JP)
(72) Inventor: ISHIDA, Shogo, Osaka-shi Osaka 532-8524 (JP); MURATA, Yasuoki, Osaka-shi Osaka 532-8524 (JP)
(74) Representative: Mewburn Ellis LLP
(86) International application number: PCT/JP2024/006927
(87) International publication number: WO 2024/202809

(57) **Abstract**

An object of the present invention is to provide low-carbohydrate noodles comprising resistant starch and having favorable color and flavor. By blending with a gluten composition that includes at least one type of gluten and has an L value of 73 or more measured in a colorimeter, somber color and gluten odor in low-carbohydrate noodles comprising resistant starch can be reduced, and low-carbohydrate noodles having favorable color and flavor can be provided. The gluten composition according to the present invention preferably includes active gluten produced by a spray drying method. Including the active gluten produced by the spray drying method improves noodle making properties and texture.

## Description

### TECHNICAL FIELD

The present invention relates to noodles having a lower level of carbohydrate than usual and containing resistant starch.

### BACKGROUND ART

Foods having a reduced level of carbohydrate or foods that enable large intake of dietary fibers have received attention in recent years with growing health consciousness.

Methods of using resistant starch as a noodle raw material to suppress the digestion and absorption of carbohydrate while causing intake of dietary fibers are known as methods for carbohydrate restriction or dietary fiber intake for noodles. The addition of not only resistant starch but various dietary fibers is effective. Examples of the types of the dietary fibers include polydextrose, resistant dextrin, low-molecular cellulose, chitosan, and psyllium husk.

Among them, resistant starch, when blended as a noodle raw material, generally presents problems such as poor noodle making properties, and texture with weak elasticity, flouriness, and roughness.

As for a method for improving the texture of low-carbohydrate noodles containing resistant starch, Patent Literature 1 discloses a method involving predetermined amounts of resistant starch derived from any one or more of wheat, tapioca, maize, and ocarina, modified starch having a low gelatinization starting temperature, and a protein. As for a method for improving the noodle making properties of low-carbohydrate noodles, Patent Literature 2 discloses a method using resistant starch, gelatinized starch, and wheat gluten. However, although their noodle making properties or texture is improved, low-carbohydrate noodles produced by use of these conventional techniques are still susceptible to improvement in color and flavor.

### CITATION LIST

### PATENT LITERATURE

Patent Literature 1: WO2018/216706
Patent Literature 2: Japanese Patent Laid-Open No. 2019-50769

### SUMMARY OF INVENTION

### TECHNICAL PROBLEM

An object of the present invention is to provide low-carbohydrate noodles comprising resistant starch and having favorable color and flavor.

### SOLUTION TO PROBLEM

The inventors of the present invention have conducted diligent studies on improvement in color and flavor of low-carbohydrate noodles comprising resistant starch and consequently found that low-carbohydrate noodles having favorable color and flavor can be obtained by blending with a gluten composition that comprises at least one type of gluten and has an L value of 73 or more measured in a colorimeter, reaching the completion of the present invention.

Specifically, the present invention provides low-carbohydrate noodles comprising wheat flour, resistant starch, and a gluten composition that comprises at least one type of gluten and has an L value of 73 or more measured in a colorimeter.

The gluten composition in the low-carbohydrate noodles according to the present invention preferably comprises active gluten produced by a spray drying method.

The low-carbohydrate noodles according to the present invention preferably comprise 10 to 50% by weight of the gluten composition based on the total amount of starches added in a raw material powder. The gluten composition preferably comprises 3% by weight or more of the active gluten produced by a spray drying method based on the total amount of starches added in a raw material powder.

The low-carbohydrate noodles according to the present invention also preferably comprise etherified starch. The amount of the etherified starch blended is preferably 5 to 50% by weight based on the resistant starch content in a raw material powder.

The noodle type of the low-carbohydrate noodles according to the present invention is preferably instant noodles.

### ADVANTAGEOUS EFFECTS OF INVENTION

The invention can provide low-carbohydrate noodles comprising resistant starch and having favorable color and flavor.

### DESCRIPTION OF EMBODIMENTS

Hereinafter, the contents of the present invention, including Examples, will be described in detail. However, the present invention is not limited by these Examples. The type of noodles produced in the present invention may be any usual type known in the art. Examples thereof include wheat noodles, buckwheat noodles, Chinese noodles, pasta, macaroni, and noodle sheets.

### 1. Main raw material powder formulation

Wheat flour and resistant starch are essential as the main raw material powder according to the present invention, and in addition to these powders, cereal flour such as buckwheat flour, barley flour, rye flour, and rice flour and various starches such as potato starch, tapioca starch, and corn starch may be used singly or as a mixture. Raw starch, gelatinized starch, and modified starch such as acetylated starch, etherified starch, and crosslinked starch can also be used as the starches.

### Wheat flour

For example, bread flour, medium-protein flour, all-purpose flour, cake flour, and durum wheat flour may be used singly or as a mixture as the wheat flour serving as the main raw material powder according to the present invention. The amount of the wheat flour blended is preferably 5 to 75% by weight as a proportion in the main raw material powder. If the amount is smaller than 5%, wheat flavor is insufficient. If the amount is larger than 75%, an effect of reducing the level of carbohydrate is small due to a decreased amount of the resistant starch added.

### Resistant starch

Examples of the resistant starch serving as the main raw material powder according to the present invention include heat-moisture-treated starch of high-amylose starch, distarch phosphate, and phosphate distarch phosphate. Examples of the raw material species of the starch include potato starch, tapioca starch, corn starch, waxy corn starch, wheat starch, and rice flour starch. The resistant starch preferably has a dietary fiber content of 60% by weight or more, particularly preferably 80% by weight or more. A larger amount of the resistant starch blended is more preferable from the viewpoint of reducing the level of carbohydrate. However, an increased amount of the resistant starch blended also increases roughness and flouriness while reducing noodle making properties and also deteriorating flavor because a binder such as gluten needs to be blended in a large amount. Hence, the amount of the resistant starch added is preferably 10 to 50% by weight in the raw material powder.

### Etherified starch

The main raw material powder formulation except for the wheat flour and the resistant starch according to the present invention is not particularly limited. Etherified starch is preferably used from the viewpoint of texture, and etherified starch derived from potato is particularly preferably used. As for the amount of the etherified starch blended, 5 to 50% by weight of the etherified starch is preferably contained based on the resistant starch content in the raw material powder. If the amount is 5% by weight or less, an effect of improving roughness or flouriness is small. If the amount is larger than 50% by weight, wheat flavor may be weakened due to a decreased amount of the wheat flour blended, or an effect of reducing the level of carbohydrate is decreased due to a decreased amount of the resistant starch blended. The etherified potato starch is strongly swollen as compared with other modified starches and, when blended into swollen noodles such as instant noodles, can produce noodles excellent in appearance with whiter and less somber noodle color. In the case of the etherified potato starch, gelatinized starch is sticky and is thus limited by an amount that can be added for noodle making. Therefore, it is preferable to use ungelatinized etherified potato starch or to use gelatinized etherified potato starch within a range that enables noodle making and use ungelatinized etherified potato starch as the remaining portion.

### 2. Sub material formulation

Gluten is essential as the sub material according to the present invention, and in addition to this material, components generally used in a usual noodle making method, for example, egg, kansui, salt, phosphates, a thickener, a noodle quality improver, a pH adjuster, a dye, a fragrance, and a preservative can be added. These components may be added as a powder together with the main raw material powder or may be dissolved or suspended in kneading water and added.

### Gluten composition

The starch to be added, such as the resistant starch or the etherified starch, used in the present invention is free of gluten. Therefore, gluten needs to be added for obtaining noodle making properties. The gluten composition according to the present invention comprises at least one type of gluten and has an L value of 73 or more measured in a colorimeter. The type of the gluten is not particularly limited as long as the L value is 73 or more. The gluten may be used singly or a plurality of glutens may be mixed. Cereal from which the gluten is derived or a method for separating the gluten is not particularly limited. The gluten may be raw gluten or may be active gluten powdered by use of various drying methods and is preferably active gluten derived from wheat (including durum wheat flour). The amount of the gluten added is preferably 10 to 50% by weight based on the total amount of starches added in the raw material powder because too small an amount deteriorates noodle making properties or texture and too large an amount also provides hard texture and poor noodle making properties. The total amount of starches added in the present invention is the total weight of starches to be added, such as the resistant starch and the etherified starch, and excludes a starch contained in cereal flour such as wheat flour.

The value of the color difference is measured by the following method: after 80 g of the wheat flour for use in the raw material powder and 20 g of the gluten composition are mixed, 50 g of water is added thereto, and the mixture is kneaded for 60 seconds and rolled out into a thickness of 10 mm, followed by the measurement of the L value as to the resulting dough using a colorimeter (manufactured by Konica Minolta, Inc.: model CR-410). When the L value is 73 or more, the resulting noodles have favorable color and have good flavor without unusual taste. If the L value is lower than 73, color is somber and gluten odor is generated and weakens wheat flavor.

The formulation of the gluten composition according to the present invention is not particularly limited. Active gluten produced by a spray drying method (hereinafter, referred to as spray-dried gluten) is preferably used from the viewpoint of noodle making properties and texture.

Examples of the method for producing the active gluten usually include a spray drying method, a flash drying method, a vacuum drying method, and a freeze drying method. The spray drying method is a method of adjusting the pH of raw gluten by the addition of acetic acid or ammonia to prepare a low viscous gluten dispersion, and then spraying the dispersion into dry hot air for instantaneous drying. The flash drying method is a method of drying raw gluten in air current while finely cutting the raw gluten. The vacuum drying method is a method of drying raw gluten in high vacuum at a low temperature. The freeze drying method is a method drying raw gluten by subliming moisture therein at a higher degree of vacuum than that of the vacuum drying method.

3% by weight or more of the spray-dried gluten is preferably contained based on the total amount of starches added in the raw material powder. If the amount of the spray-dried gluten is smaller, noodle making properties or texture is not excellent. The spray-dried gluten, if having poor color tone, is preferably added without deteriorating the color tone of the gluten composition because a large amount of the spray-dried gluten deteriorates the color difference of the gluten composition.

### (2) Kneading step

Noodle dough is produced by kneading a noodle raw material. Specifically, the sub material such as the gluten composition is added to the main raw material powder such as the wheat flour and the resistant starch. After powder mixing, kneading water containing a sub material such as salt, phosphate, and an alkaline agent dissolved in water is added thereto, and the mixture is well kneaded using a mixer such that the individual raw materials are uniformly mixed to produce dough. A mixer for use in the kneading is not particularly limited, and a batch-type mixer, a flow jet mixer, a vacuum mixer, or the like can be appropriately used.

In this respect, if the amount of water added is large by kneading water, the dough easily bunches up early and is difficult to then prepare into a noodle belt or to roll out. Hence, although a preferable amount of water added by kneading water differs depending on the temperature of the dough, water is preferably added such that a noodle belt moisture is 30 to 45% by mass, more preferably 35 to 40% by mass.

### (3) Noodle making step

Subsequently, noodle strings are prepared from the prepared dough. A preparation method can be performed in accordance with an ordinary method. Examples thereof include a method of extruding the dough using an extruder or the like to prepare noodle strings, and a method of preparing the dough into a crude noodle belt with a roll and then into a noodle belt by compound or the like, further rolling out the noodle belt a plurality of times into a predetermined noodle belt thickness, and then cutting the noodle belt using a cutting-out roll called cutting blade or cutting with a kitchen knife to prepare noodle strings. In the case of preparing a noodle belt and then preparing noodle strings, the noodle belt may be prepared using an extruder and then rolled out and cut, or a plurality of noodle belts may be combined to prepare a noodle belt having a multilayer structure, which is then rolled out and cut. In the case of combining a plurality of noodle belts to prepare a multilayer structure, not only is resistant starch-derived dietary fiber prevented from leaking out during cooking or processing but slicky texture with smooth surface is easily obtained, by decreasing the amount of the resistant starch blended in an outer layer and increasing the amount of the resistant starch blended in an inner layer. In the case of preparing an extruded noodle belt or extruded noodle strings using an extruder or the like, this operation is preferably performed under reduced pressure. Subsequently, the prepared noodle strings are cut into an appropriate length to prepare raw noodle strings.

The raw noodle strings may be packaged after flour is sprinkled thereon, to prepare raw noodles, or the raw noodle strings may be steamed and/or boiled to prepare steamed noodles or boiled noodles. The boiled noodles, when pH-adjusted, hermetically sealed, and sterilized, can be prepared into chilled noodles or raw-type instant noodles. The raw noodle strings may be dried to prepare dry noodles or semidry noodles. The raw noodles may be treated by steaming and/or boiling, for example, and frozen to prepare frozen noodles.

The instant noodles can be produced by steaming and/or boiling the raw noodle strings, if necessary, followed by drying. A drying method is not particularly limited, and a drying method generally used in the production of instant noodles can be applied thereto. Specifically, examples thereof include fry (fry in oil) drying as well as non-fry drying such as hot-air drying, vacuum-freeze-drying, microwave drying, and air drying at low temperatures. These approaches may be carried out in combination. The fry drying treatment is usually carried out at 130 to 160°C for 1 to 3 minutes, and the hot-air drying treatment is usually carried out at 60 to 120°C for approximately 15 to 180 minutes. A moisture content after the drying treatment can be 1 to 5% by weight for the fry drying treatment and 2 to 12% by mass for the hot-air drying treatment.

The noodles of the low-carbohydrate noodles according to the present invention is not particularly limited. In the case of instant noodles such as fried noodles or non-fried noodles in which noodles are swollen, etherified potato starch is preferably used because not only texture but color tone is favorable as compared with other starches.

The noodle type of the low-carbohydrate noodles according to the present invention is particularly preferably noodles having white color, preferably noodles such as wheat noodles, Somen (Japanese very thin wheat noodles), Hiyamugi (Japanese thin wheat noodles), or Hoto (Japanese very thick wheat noodles).

### EXAMPLES

Hereinafter, Examples of the present invention will be described. However, the present invention is not limited by these examples.

### <Test 1: Study on type of gluten>

In order to study the color of gluten, gluten compositions described in Table 1 were provided using gluten ingredients given below. After 80 g of wheat flour (Nippn Corp.: No. 2) and 20 g of each gluten composition were mixed, 50 g of water was added thereto, and the mixture was kneaded for 60 seconds and rolled out into a thickness of 10 mm, followed by the measurement of an L value as to the resulting dough using a colorimeter (manufactured by Konica Minolta, Inc.: model CR-410). Three samples were prepared for each composition and used in the measurement. An average numeric value is shown in Table 1 below.

### (Gluten ingredient)

Gluten A: Wheto pro 80 (ADM Japan Ltd.)
Gluten B: A-Glu SS (Glico Nutrition Co., Ltd.)
Gluten C: V-75 (Glico Nutrition Co., Ltd.)

The gluten B and the gluten C were produced by spray drying and flash drying production methods, respectively.

**[Table 1]**

| (%) | Composition 1 | Composition 2 | Composition 3 | Composition 4 | Composition 5 | Composition 6 | Composition 7 | Composition 8 | Composition 9 |
|---|---|---|---|---|---|---|---|---|---|
| Gluten A | 100 | - | - | 90 | 70 | 50 | 30 | 10 | 50 |
| Gluten B | - | 100 | - | 10 | 30 | 50 | 70 | 90 | - |
| Gluten C | - | - | 100 | - | - | - | - | - | 50 |
| Color difference (L value) | 76.12 | 71.79 | 72.42 | 75.93 | 75.13 | 74.51 | 73.86 | 72.57 | 75.46 |

### (Test Example 1-1)

200 g of wheat flour (all-purpose flour), 500 g of resistant starch (tapioca distarch phosphate (dietary fiber content: 85%)), and 100 g of modified starch (etherified potato starch) were mixed. To the resulting main raw material powder, 200 g of the gluten composition 1 was added and mixed, and kneading water containing 20 g of salt and 3 g of phosphate dissolved in 450 ml of water was added. The mixture was kneaded for 15 minutes in a mixer to prepare noodle dough (dough).

The prepared dough was compounded to prepare a noodle belt. The noodle belt was rolled out into 1.50 mm by roll rolling. Then, the noodle belt was cut with a 9th angle roll cutting blade to prepare noodle strings. Then, the noodle strings were steamed at 100°C for 2 minutes and cut into 30 cm. 120 g of the resulting noodles were placed in a retainer for fry drying and fried at 150°C for 2 minutes to produce a low-carbohydrate fried noodle sample (wheat noodles). Test results are shown in Table 3.

### (Test Examples 1-2 to 1-9)

Fried noodles were prepared by the same method as in Test Example 1 except that each gluten composition was used in Test Example 1 on the basis of a formulation described in Table 2. Results of each test are shown in Table 3.

Sensory evaluation was conducted by six skilled panelists as to the prepared low-carbohydrate fried noodles. 75 g of the low-carbohydrate fried noodles was placed in a cup, and 400 ml of hot water was poured thereinto. The cup was covered and left standing for 5 minutes. Then, the noodles were lightly loosened, then eaten, and evaluated for color, flavor, noodle making properties, and texture. The color, the flavor, and the noodle making properties were evaluated according to four scales given below. Two types of evaluations were used for the texture. Tests 1 and 2 were conducted according to five scales of evaluation 1, and tests 3 and 4 were conducted according to five scales of evaluation 2. A rating of "good" or higher was accepted for the evaluation of the color, the flavor, and the noodle making properties, and a rating of 3 or higher was accepted for the evaluation of the texture.

### <Evaluation of color>

Excellent (double circle): Very favorable without somberness.
Good (circle): Less somber and favorable.
Fair (triangle): Slightly somber and slightly poor.
Poor (cross mark): Somber and poor.

### <Evaluation of flavor>

Excellent (double circle): Wheat flavor is strongly felt without unusual taste.
Good (circle): Unusual taste is rarely felt and wheat flavor is felt.
Fair (triangle): Unusual taste is slightly felt and wheat flavor is weak.
Poor (cross mark): Unusual taste is strong and wheat flavor is hardly felt.

### <Evaluation of noodle making properties>

Excellent (double circle): Very favorable without breaking the noodle belt or the noodle strings.
Good (circle): The noodle belt or the noodle strings are rarely broken, and noodle making properties are favorable.
Fair (triangle): The noodle belt or the noodle strings are broken, and noodle making properties are slightly poor.
Poor (cross mark): The noodle belt or the noodle strings are repeatedly broken, and noodle making is difficult.

### <Evaluation 1 of texture>

5: Sufficiently viscoelastic and supple, and very favorable.
4: Viscoelastic and supple, and favorable.
3: Slightly insufficiently viscoelastic, or slightly insufficiently supple but viscoelastic, and basically acceptable.
2: Insufficiently viscoelastic and supple, and slightly poor.
1: Very insufficiently viscoelastic and supple, and poor.

### <Evaluation 2 of texture>

5: Sufficiently having well-cooked feeling and having hardly perceivable flouriness, and very favorable.
4: Having well-cooked feeling and having less flouriness, and favorable.
3: Having slightly insufficient well-cooked feeling but having less flouriness, and basically acceptable.
2: Having insufficient well-cooked feeling and having slightly conspicuous flouriness, and slightly poor.
1: Having very insufficient well-cooked feeling and having flouriness, and poor.

**[Table 2]**

| Raw material (g) | Test Example 1-1 | Test Example 1-2 | Test Example 1-3 | Test Example 1-4 | Test Example 1-5 | Test Example 1-6 | Test Example 1-7 | Test Example 1-8 | Test Example 1-9 |
|---|---|---|---|---|---|---|---|---|---|
| Wheat flour | 200 | 200 | 200 | 200 | 200 | 200 | 200 | 200 | 200 |
| Resistant starch | 500 | 500 | 500 | 500 | 500 | 500 | 500 | 500 | 500 |
| Gluten composition 1 | 200 | - | - | - | - | - | - | - | - |
| Gluten composition 2 | - | 200 | - | - | - | - | - | - | - |
| Gluten composition 3 | - | - | 200 | - | - | - | - | - | - |
| Gluten composition 4 | - | - | - | 200 | - | - | - | - | - |
| Gluten composition 5 | - | - | - | - | 200 | - | - | - | - |
| Gluten composition 6 | - | - | - | - | - | 200 | - | - | - |
| Gluten composition 7 | - | - | - | - | - | - | 200 | - | - |
| Gluten composition 8 | - | - | - | - | - | - | - | 200 | - |
| Gluten composition 9 | - | - | - | - | - | - | - | - | 200 |
| Modified starch | 100 | 100 | 100 | 100 | 100 | 100 | 100 | 100 | 100 |
| Total | 1000 | 1000 | 1000 | 1000 | 1000 | 1000 | 1000 | 1000 | 1000 |

**[Table 3]**

| | Test Example 1-1 | Test Example 1-2 | Test Example 1-3 | Test Example 1-4 | Test Example 1-5 | Test Example 1-6 | Test Example 1-7 | Test Example 1-8 | Test Example 1-9 |
|---|---|---|---|---|---|---|---|---|---|
| Color | ⊚ | × | × | ⊚ | ⊚ | ○ | ○ | × | ○ |
| Flavor | ⊚ | × | × | ⊚ | ⊚ | ○ | ○ | × | ○ |
| Noodle making properties | × | ○ | × | Δ | ○ | ⊚ | ○ | ○ | × |
| Texture | 2 | 3 | 2 | 3 | 5 | 5 | 5 | 4 | 2 |

As shown in Test Examples 1-1, 1-4 to 1-7, and 1-9, the color and the flavor were highly rated when a gluten composition having an L value of 73 or more was used. On the other hand, as shown in Test Examples 1-2, 1-3, and 1-8, both the color and the flavor were low rated due to the occurrence of somberness or unusual taste when a gluten composition having an L value of less than 73 was used.

These results suggested that use of the gluten composition having an L value of 73 or more produces noodles having favorable color and flavor.

As shown in Test Examples 1-2 and 1-4 to 1-8, the noodle making properties were more highly rated in the test groups involving the gluten B as compared with the test groups involving no gluten B. In gluten A-gluten B blending ratios from 9:1 to 5:5, an elevated proportion of the gluten B increased the extensibility of the noodle belt and improved the rating. When the ratio exceeded 5:5, although noodle belt strength was reduced and the rating was slightly decreased, the rating was favorable.

As shown in Test Examples 1-2 and 1-4 to 1-8, the texture was also more highly rated in the test groups involving the gluten B as compared with the test groups involving no gluten B. In gluten A-gluten B blending ratios from 9:1 to 5:5, an elevated proportion of the gluten B increased viscoelasticity and suppleness and improved the rating. When the ratio exceeded 5:5, although the viscoelasticity was slightly reduced, the rating was favorable.

These results suggested that the gluten composition preferably comprises 10% by weight or more of the spray-dried gluten in consideration of the texture and preferably comprises 30% by weight or more thereof in consideration of the texture and the noodle making properties.

### <Test 2: Study on amount of gluten composition blended>

### (Test Example 2-1)

340 g of wheat flour (all-purpose flour), 500 g of resistant starch (tapioca distarch phosphate (dietary fiber content: 85%)), and 100 g of modified starch (etherified potato starch) were mixed. To the resulting main raw material powder, 60 g of the gluten composition 6 was added and mixed, and kneading water containing 20 g of salt and 3 g of phosphate dissolved in 450 ml of water was added. The mixture was kneaded for 15 minutes in a mixer to prepare noodle dough (dough). A subsequent operation of the noodle making step was performed in the same manner as in Test Example 1 to produce low-carbohydrate fried noodles. Sensory evaluation was also conducted by the same method as in Test Example 1. Test results are shown in Table 5.

### (Test Examples 2-2 and 2-3)

Fried noodles were prepared by the same method as in Test Example 1 except that the amounts of the wheat flour and the gluten composition 6 blended were changed in Test Example 2-1 on the basis of a formulation described in Table 4. Results of each test are shown in Table 5.

**[Table 4]**

| Raw material (g) | Test Example 2-1 | Test Example 2-2 | Test Example 2-3 |
|---|---|---|---|
| Wheat flour | 340 | 220 | 100 |
| Resistant starch | 500 | 500 | 500 |
| Gluten composition 6 | 60 | 180 | 300 |
| Modified starch | 100 | 100 | 100 |
| Total | 1000 | 1000 | 1000 |

**[Table 5]**

| | Test Example 2-1 | Test Example 2-2 | Test Example 2-3 |
|---|---|---|---|
| Amount of gluten added | 10% | 30% | 50% |
| Color | ⊚ | ○ | ○ |
| Flavor | ⊚ | ○ | ○ |
| Noodle making properties | ○ | ⊚ | ○ |
| Texture | 3 | 5 | 4 |

As shown in Test Examples 2-1 to 2-3, the rating of the color and the flavor tended to be reduced with increase in the amount of the gluten added based on the total amount of starches added in the raw material powder. Nonetheless, both the color and the flavor were highly rated even in Test Example 2-3 having the largest amount of the gluten added.

The noodle making properties were most highly rated in Test Example 2-2. As compared with Test Example 2-2, Test Example 2-1 had a slightly weak noodle belt, and Test Example 2-3 had slightly reduced extensibility. Nonetheless, the rating in all the test examples fell within a favorable range.

The texture was also most highly rated in Test Example 2-2. As compared with Test Example 2-2, Test Example 2-1 was inferior in viscoelasticity, and Test Example 2-3 was slightly inferior in suppleness. Nonetheless, the rating in all the test examples fell within a favorable range.

These results suggested that the amount of the gluten added is preferably 10 to 50% by weight based on the total amount of starches added in the raw material powder in consideration of the noodle making properties and the texture. Taken together with the results of test 1, the spray-dried gluten is contained preferably at 1% by weight or more in consideration of the texture and preferably at 3% by weight or more in consideration of the texture and the noodle making properties based on the total amount of starches added in the raw material powder.

### <Test 3: Study on modified starch>

### (Test Example 3-1)

200 g of wheat flour (all-purpose flour), 500 g of resistant starch (tapioca distarch phosphate (dietary fiber content: 85%)), and 100 g of etherified potato starch were mixed. To the resulting main raw material powder, 200 g of the gluten composition 6 was added and mixed, and kneading water containing 20 g of salt and 3 g of phosphate dissolved in 450 ml of water was added. The mixture was kneaded for 15 minutes in a mixer to prepare noodle dough (dough). A subsequent operation of the noodle making step was performed in the same manner as in Test Example 1 to produce low-carbohydrate fried noodles. Sensory evaluation was conducted by the same method as in Test Example 1 except that evaluation 2 of the texture was used. Test results are shown in Table 7.

### (Test Examples 3-2 to 3-7)

Fried noodles were prepared by the same method as in Test Example 1 except that the type of the modified starch was changed in Test Example 3-1 on the basis of a formulation described in Table 6. Results of each test are shown in Table 7.

**[Table 6]**

| Raw material (g) | Test Example 3-1 | Test Example 3-2 | Test Example 3-3 | Test Example 3-4 | Test Example 3-5 | Test Example 3-6 | Test Example 3-7 |
|---|---|---|---|---|---|---|---|
| Wheat flour | 200 | 200 | 200 | 200 | 200 | 200 | 200 |
| Resistant starch | 500 | 500 | 500 | 500 | 500 | 500 | 500 |
| Gluten composition 6 | 200 | 200 | 200 | 200 | 200 | 200 | 200 |
| Etherified potato starch | 100 | - | - | - | - | - | - |
| Etherified tapioca starch | - | 100 | - | - | - | - | - |
| Etherified corn starch | - | - | 100 | - | - | - | - |
| Acetylated potato starch | - | - | - | 100 | - | - | - |
| Potato starch | - | - | - | - | 100 | - | - |
| Acetylated tapioca starch | - | - | - | - | - | 100 | - |
| Gelatinized rice starch | - | - | - | - | - | - | 100 |
| Total | 1000 | 1000 | 1000 | 1000 | 1000 | 1000 | 1000 |

**[Table 7]**

| | Test Example 3-1 | Test Example 3-2 | Test Example 3-3 | Test Example 3-4 | Test Example 3-5 | Test Example 3-6 | Test Example 3-7 |
|---|---|---|---|---|---|---|---|
| Type of modified starch | Etherified potato | Etherified tapioca | Etherified corn | Acetylated potato | Potato | Acetylated tapioca | Gelatinized rice |
| Color | ○ | ○ | ○ | ○ | ○ | ○ | - |
| Flavor | ○ | ○ | ○ | ○ | ○ | ○ | - |
| Noodle making properties | ⊚ | ⊚ | ⊚ | ⊚ | ⊚ | ⊚ | × |
| Texture | 5 | 3 | 3 | 2 | 1 | 2 | - |

As shown in Test Examples 3-1 to 3-7, the color and the flavor were highly rated at equivalent levels among all the test groups except for Test Example 3-7 which was not evaluable because noodle making was impossible.

The noodle making properties were at equivalent levels among all the test groups and favorably rated except for Test Example 3-7 in which noodle making was impossible due to strong stickiness of the dough.

As shown in Test Examples 3-1 to 3-3, the texture was favorably evaluated only in the test groups using the etherified starch. The texture was highly evaluated, particularly, in Test Example 3-1 using potato-derived etherified starch, and sufficiently had well-cooked feeling and hardly had flouriness. As shown in Test Examples 3-4 and 3-6, although well-cooked feeling or flouriness in the test groups using the acetylated starch was improved as compared with the test groups using unmodified starch, they was poorer than that of the test groups using the etherified starch and fell below the acceptance line.

From these results, etherified starch is preferably blended, and in particular, etherified potato starch is more preferably blended, in consideration of the texture.

### <Test 4: Study on amount of etherified potato starch blended>

### (Test Example 4-1)

290 g of wheat flour (all-purpose flour), 500 g of resistant starch (tapioca distarch phosphate (dietary fiber content: 85%)), and 10 g of etherified potato starch were mixed. To the resulting main raw material powder, 200 g of the gluten composition 6 was added and mixed, and kneading water containing 20 g of salt and 3 g of phosphate dissolved in 450 ml of water was added. The mixture was kneaded for 15 minutes in a mixer to prepare noodle dough (dough). A subsequent operation of the noodle making step was performed in the same manner as in Test Example 1 to produce low-carbohydrate fried noodles. Sensory evaluation was conducted by the same method as in Test Example 1 except that evaluation 2 of the texture was used. Test results are shown in Table 9.

### (Test Examples 4-2 to 4-5)

Fried noodles were prepared by the same method as in Test Example 1 except that the amounts of the wheat flour and the etherified potato blended were changed in Test Example 4-1 on the basis of a formulation described in Table 8. Results of each test are shown in Table 9.

**[Table 8]**

| Raw material (g) | Test Example 4-1 | Test Example 4-2 | Test Example 4-3 | Test Example 4-4 | Test Example 4-5 |
|---|---|---|---|---|---|
| Wheat flour | 290 | 275 | 200 | 50 | 0 |
| Resistant starch | 500 | 500 | 500 | 500 | 500 |
| Gluten composition 6 | 200 | 200 | 200 | 200 | 200 |
| Etherified potato starch | 10 | 25 | 100 | 250 | 300 |
| Total | 1000 | 1000 | 1000 | 1000 | 1000 |

**[Table 9]**

| | Test Example 4-1 | Test Example 4-2 | Test Example 4-3 | Test Example 4-4 | Test Example 4-5 |
|---|---|---|---|---|---|
| Amount of etherified potato starch | 2% | 5% | 20% | 50% | 60% |
| Color | O | ○ | ○ | ○ | ○ |
| Flavor | ○ | ○ | ○ | ○ | Δ |
| Noodle making properties | ○ | ○ | ⊚ | ○ | ○ |
| Texture | 2 | 4 | 5 | 4 | 4 |

As shown in Test Examples 4-1 to 4-5, the color was highly rated at equivalent levels among all the test groups.

The flavor was poorly rated only in Test Example 4-5 because no wheat flour was blended. Since the amount of the wheat flour was adjusted in increasing or decreasing the amount of the etherified starch added, the rating of the flavor was reduced in Test Example 4-5, which can however be presumed to be able to improve the rating of the flavor by adjusting the amount of the gluten composition or the resistant starch.

From these results, the amount of the etherified starch blended is preferably 2% by weight or more, more preferably 2 to 50% by weight, based on the amount of the resistant starch.

The noodle making properties were most favorable in Test Example 4-3. The noodle making properties tended to vary depending on increase or decrease in the total amount of glutens including gluten in the raw material wheat flour, and slightly hard dough in Test Example 4-1 and soft dough in Test Example 4-5 were obtained. Nonetheless, the rating in all the test examples fell within a favorable range.

The rating of the texture tended to be improved by attaining increase in well-cooked feeling and decrease in flouriness with increase in the amount of the etherified starch added, up to Test Example 4-3. Test Examples 4-4 and 4-5 involving a larger amount of the etherified starch added than that of Test Example 4-3 were slightly inferior in rating to Test Example 4-3. Nonetheless, the rating in all the test examples fell within a favorable range.

From these results, the amount of the etherified starch blended is preferably 5% by weight or more, more preferably 5 to 50% by weight, based on the amount of the resistant starch in consideration of the texture.

As described above, the present invention has excellent effects by which low-carbohydrate noodles having favorable color and flavor can be produced by blending with a gluten composition that comprises at least one type of gluten and has an L value of 73 or more.

## Claims

1. Low-carbohydrate noodles comprising wheat flour, resistant starch, and a gluten composition, wherein
the gluten composition comprises at least one type of gluten and has an L value of 73 or more when a color difference is measured by the following method:
(method for measuring L value)
after 80 g of the wheat flour and 20 g of the gluten composition are mixed, 50 g of water is added thereto, and the mixture is kneaded for 60 seconds and rolled out into a thickness of 10 mm, followed by the measurement of the L value as to the resulting dough using a colorimeter.

2. The low-carbohydrate noodles according to claim 1, wherein the gluten composition comprises active gluten produced by a spray drying method.

3. The low-carbohydrate noodles according to claim 1 or 2, wherein the low-carbohydrate noodles comprise 10 to 50% by weight of the gluten composition based on the total amount of starches added in a raw material powder.

4. The low-carbohydrate noodles according to claim 3, wherein the gluten composition comprises 3% by weight or more of the active gluten produced by a spray drying method based on the total amount of starches added in a raw material powder.

5. The low-carbohydrate noodles according to claim 1 or 2, further comprising etherified starch.

6. The low-carbohydrate noodles according to claim 5, wherein the low-carbohydrate noodles comprise 5 to 50% by weight of the etherified starch based on the resistant starch content in a raw material powder.

7. The low-carbohydrate noodles according to claim 1 or 2, wherein the low-carbohydrate noodles are instant noodles.
